# NEW EUROPEAN PATENT SPECIFICATION

(11) **EP 0 269 426 B2**
(45) Date of publication and mention of the opposition decision: **03.12.1997**
(45) Mention of the grant of the patent: 29.04.1992
(21) Application number: 87310384.0
(22) Date of filing: 25.11.1987
(51) Int. Cl.: F02P 5/155

(54) **Knock detection system**
Klopfdetektor
Système de détection de cliquetis

(30) Priority: 27.11.1986 GB 8628338
(43) Date of publication of application: 01.06.1988
(73) Proprietor: LUCAS INDUSTRIES public limited company, Birmingham, B19 2XF (GB)
(72) Inventor: Cockerham, Kevin, Sutton Coldfield West Midlands B75 7ST (GB); Packwood, Simon William, Kings Heath Birmingham (GB)
(74) Representative: Gibson, Stewart Harry

(56) References cited:
- EP-A- 0 084 376
- EP-A- 0 121 607
- EP-A- 0 146 668
- EP-A- 0 202 978
- DE-A- 3 006 417
- DE-A- 3 342 466
- US-A- 4 425 891
- US-A- 4 644 918
- PATENT ABSTRACTS OF JAPAN, vol. 7, no. 169 (M-231)[1314], 26th July 1983 & JP-A-58-74 872
- PATENT ABSTRACTS OF JAPAN, vol. 8, no. 148 (M-308)[1585], 11th July 1984 & JP-A-59-43 972

## Description

This invention relates to a knock detection system for an internal combustion engine.

EP-A-0 202 978 discloses a knock-detection system for an internal combustion engine. comprising an input for receiving a signal from a vibration sensing transducer, a variable-gain amplifier connected to said input, a rectifying and integrating circuit connected to the output of the amplifier control means for comparing the output level of the rectifying and integrating circuit with a reference to determine if the engine is in a knock condition, and a feedback circuit for controlling the gain of the variable-gain amplifier in dependence upon variations in the output level of the rectifying and integrating circuit.

In EP-A-0 202 978, the feedback circuit comprises a peak detector followed by an integrator, for detecting peaks in the output level of the rectifying and integrating circuit and continuously integrating the output of the peak detector to provide a gain control signal for the variable-gain amplifier.

Also, the rectifying and integrating circuit comprises a rectifier followed by a so-called "partial integrator", which we believe is a low pass filter.

The present invention is characterised in that the rectifying and integrating circuit is controlled by the control means to rectify and integrate the output of the variable-gain amplifier over successive time periods, and the control means measures the output level of the rectifying and integrating circuit at the end of each said time period to provide successive readings and then each time resets the integrator of said rectifying and integrating circuit, each said reading being compared with said reference to determine if said reading indicates a knock condition in the engine, in that said control means includes means for determining a background average of said readings over a period of time, said background average being formed as an average of said readings prevailing in the absence of any knock condition of the engine being detected, and in that the feedback circuit controls the gain of said variable-gain amplifier in dependence upon said background average.

In a preferred embodiment of the knock detection system in accordance with this invention, the control means comprises a microprocessor which serves to hold and update a background average for each cylinder of the engine, and also from this a background average for all cylinders. Then if the background average for all cylinders rises above an upper threshold or falls below a lower threshold, the gain of the amplifier is reduced or increased accordingly.

In the preferred embodiment the variable gain amplifier comprises a transconductance amplifier with its gain control effected by way of its bias current. The microprocessor may provide a train of pulses having a variable mark/space ratio for determining the amplifier gain, which pulse train is applied to a digital-to-analogue converter for controlling the amplifier bias current. This digital-to-analogue converter may comprise a simple low-pass filter.

A single microprocessor may control the variable gain amplifier as described above and also control the integrating function in accordance with known principles. Thus, in this case the microprocessor controls the integrating circuit in order to provide an output proportional to the knock signal level over a predetermined period for each cylinder, and further controls resetting of the integrating capacitor.

EP-A-0 084 376 discloses a knock-detection system in which the vibration sensing transducer is connected to a variable-gain amplifier; the output of this amplifier is connected to one input of a comparator, and separately via a rectifier and a background level detector to the second input of the comparator. The comparator compares the knock signal from the amplifier, with a background or reference level from the background level detector. The gain of the amplifier is controlled directly in dependence upon the output of the background level detector.

DE-A-3 342 466 discloses (at Figure 3) a knock-detection system in which the vibration sensing transducer is connected to a variable-gain amplifier: the output of the amplifier is connected to one input of a comparator, which compares the knock signal from the amplifier with a predetermined reference level. The output of the comparator is connected to a microprocessor which counts the output pulses provided by the comparator, to provide a knock condition signal in the event of receiving three successive pulses. A separate feedback loop comprises a Schmitt trigger connected to the variable-gain amplifier output and an integrator connected to the Schmitt trigger output, to provide the gain control signal for the variable-gain amplifier.

An embodiment of this invention will now be described by way of example only and with reference to the accompanying drawings, in which:
FIGURE 1 is a circuit diagram of a knock detection system in accordance with the invention; and
FIGURE 2 is a flow diagram of the gain control sub-routine of a microprocessor incorporated in the knock detection system.

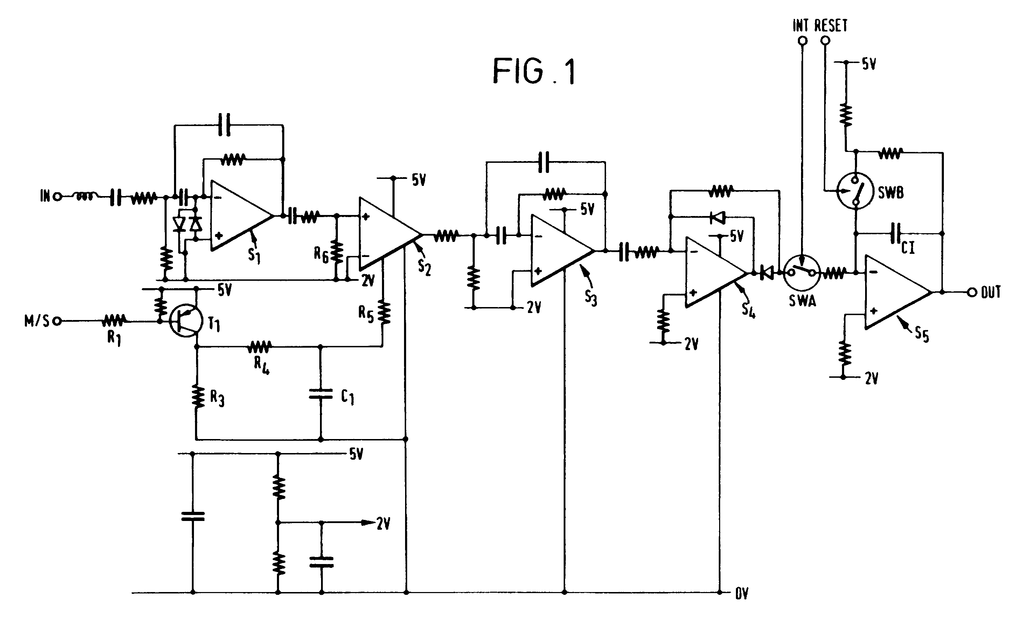

Referring to Figure 1 of the drawings, there is shown a knock detection system for an internal combustion engine of a vehicle. The system comprises a signal input IN which is connected to a piezoelectric or other vibration-sensing transducer mounted to the engine. The signal input IN is connected to the first stage S₁ of the system, which is an active band-pass filter having its pass band centred around the fundamental frequency of the knock vibration. The band-pass filter stage S₁ feeds a second stage S₂ which comprises a variable gain amplifier, which will be described in more detail below. The third stage S₃ is another active band-pass filter with its pass-band centred around the knock frequency, but also provides the required gain for the overall circuit. The fourth stage S₄ comprises a precision half-wave rectifier and feeds an integrator fifth stage S₅ via an electronic switch SWA. The integrator provides an output OUT which is read by a microprocessor of the system via an analogue-to-digital converter. A second electronic switch SWB is connected in series with a resistor across the integrating capacitor Cl: the microprocessor controls the switches SWA and SWB over lines INT and RESET, closing switch SWA for each integration process and closing switch SWB afterwards to reset the capacitor. The integration period comprises a predetermined angular window for each cylinder, but may instead comprise a fixed time period for each cylinder.

The variable gain amplifier stage S₂ comprises a transconductance amplifier having a linear gain control effected by way of its bias current. In the example shown, a pulse train of variable mark space ratio, controlled by the microprocessor, is applied to a terminal M/S and thence via a series resistor R₁ to the base of a transistor T₁. The emitter of transistor T₁ is connected to a + 5V rail and its collector is connected to ground via a resistor R₃. A resistor R₄ and a capacitor C₁ are connected across resistor R₃ and the junction of R₄, C₁ is connected to a resistor R₅ through which the bias current for the amplifier S₂ is delivered. The arrangement therefore forms a low-pass filter acting as a digital-to-analogue converter for responding to the variable mark space ratio of the signal applied to terminal M/S from the microprocessor, in order to control the bias current and therefore the gain of the amplifier S₂. It will also be noted that the input to the stage S₂ is potted down by a resistor R₆ in order to avoid undesired output compression in view of the input limitations of the transconductance amplifier.

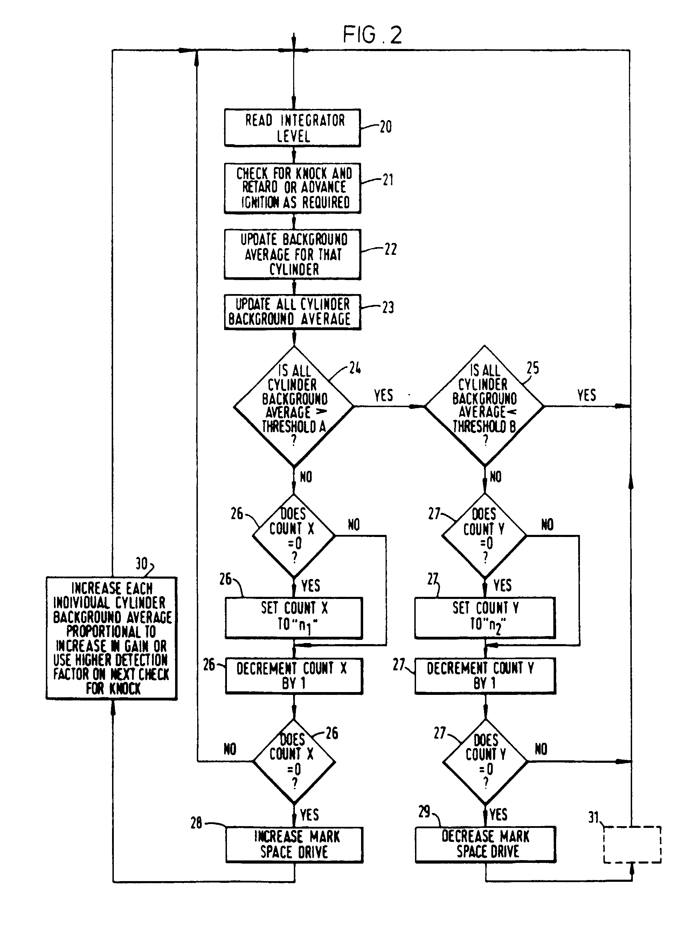

The microprocessor seeks to maintain the integrator output level in an optimum band between lower and upper thresholds A, B, by controlling the gain of the system using feedback from the integrator output. However, the response of the system is not so fast that it might mask the changes in integrator level due to knock. An average of the integrator output level found in the absence of knocking (i.e. a background average) is used as the criterion governing the gain of stage S₂, and an example of this form of control will now be described with reference to Figure 2.

Figure 2 shows a flow diagram of the sub-routine of the microprocessor for controlling the gain of the amplifier stage S₂. In this sub-routine, at step 20 the microprocessor reads the integrator output level, at the end of an integrating period controlled by the microprocessor through switch SWA in Figure 1 and before resetting the integrating capacitor Cl through switch SWB. At step 21 the microprocessor compares the integrator output level which it has just read against a threshold value in order to determine whether the respective cylinder is exhibiting knock: if a knocking condition is detected, then the microprocessor retards the ignition timing to terminate the knocking, whilst if there is no knocking the microprocessor advances the ignition timing. At step 22 the microprocessor updates a background average of the integrator output level for the particular cylinder concerned. The microprocessor holds background averages for the respective cylinders and at step 23 it updates the background average for all cylinders. Step 24 determines if the all-cylinder background average is greater than the lower threshold A: if it is, step 25 determines if the all-cylinder average is also lower than the upper threshold B. Thus if the all-cylinder background average lies between the thresholds A and B, the sub-routine of Figure 2 is carried out again without any change to the gain of stage S₂.

Suppose however either step 24 or 25 determines that the all-cylinder background average of the integrator output level is outside the band defined by thresholds A and B. Then a timing facility at 26 or 27 imparts a delay (effectively requiring the all-cylinder average to lie outside the band for a number n₁ or n₂ of successive readings) before the mark/space ratio of the driving pulse train provided by the microprocessor is either increased or decreased at 28 or 29, to increase or decrease the gain of the amplifier stage S₂.

If the all-cylinder background average has fallen below the lower threshold A such that the amplifier gain is increased at step 28, then step 30 serves to proportionally increase each individual-cylinder average (and hence the all-cylinders average). Instead step 30 may increase the reference against which the integrator output level is compared in order to check for a knocking condition. A corresponding step 31 may be provided (for decreasing each cylinder average or decreasing the reference) if step 29 is invoked for decreasing the amplifier gain.

The knock detection system which has been described accordingly overcomes the problem due to input offset voltage errors by exercising a gain control tending to maintain the integrator output level within an optimum band.

## Claims

1. A knock detection system for an internal combustion engine, comprising an input (IN) for receiving a signal from a vibration sensing transducer, a variable-gain amplifier (S2) connected to said input, a rectifying and integrating circuit (S4,S5) connected to the output of the amplifier, control means for comparing the output level of the rectifying and integrating circuit (S4, S5) with a reference to determine if the engine is in a knock condition, and a feedback circuit for controlling the gain of the variable-gain amplifier (S2) in dependence upon variations in the output level of the rectifying and integrating circuit (S4,S5) characterised in that the rectifying and integrating circuit (S4,S5) is controlled by the control means to rectify and integrate the output of the variable-gain amplifier (S2) over successive time periods, and the control means measures the output level of the rectifying and integrating circuit (S4, S5) at the end of each said time period to provide successive readings and then each time resets the integrator (S5) of said rectifying and integrating circuit, each said reading being compared with said reference to determine if said reading indicates a knock condition in the engine, in that said control means includes means for determining a background average of said readings over a period of time, said background average being formed as an average of said readings prevailing in the absence of any knock condition of the engine being detected, and in that the feedback circuit controls the gain of said variable-gain amplifier (S2) in dependence upon said background average.

2. A knock-detection system as claimed in claim 1, characterised in that the control means determines if said background average rises above an upper threshold or falls below a lower threshold, in order to decrease or increase the gain of said variable-gain amplifier over said feedback circuit.

3. A knock-detection system as claimed in claim 1 or 2, characterised in that the feedback circuit alters the gain of the variable-gain amplifier (S2) only after a predetermined number of successive readings of the background average are above the upper threshold or below the lower threshold.

4. A knock-detection system as claimed in any preceding claim, characterised in that the control means alters said reference, against which the output level of the rectifying and integrating circuit is compared, in proportion to changes which are made to the gain of the variable-gain amplifier (S2).

5. A knock detection system as claimed in any preceding claim, characterised in that said variable-gain amplifier (S2) comprises a transconductance amplifier and said feedback circuit controls the bias current of said transconductance amplifier.

6. A knock-detection system as claimed in any preceding claim, characterised in that the control means provides a train of pulses (M/S) of variable mark/space ratio, and the feedback circuit comprises a digital-to-analogue converter (R4, C1) receiving said train of pulses and having its output connected to the variable-gain amplifier (S2) to control its gain.

## Patentansprüche

1. System zum Feststellen von Klopfen für einen Verbrennungsmotor, das einen Eingang (IN) zum Empfangen eines Signals von einem Vibration detektierenden Wandler, einen Verstärker (S2) mit variabler Verstärkung, der mit dem Eingang verbunden ist, eine gleichrichtende und integrierende Schaltung (S4, S5), die mit dem Ausgang des Verstärkers verbunden ist, Steuermittel zum Vergleichen des Ausgangspegels der gleichrichtenden und integrierenden Schaltung (S4, S5) mit einer Bezugsgröße, um festzustellen, ob sich der Motor in einem Klopfzustand befindet, und eine Rückkopplungsschaltung zum Steuern oder Regeln der Verstärkung des Verstärkers (S2) mit variabler Verstärkung in Abhängigkeit von Änderungen im Ausgangspegel der gleichrichtenden und integrierenden Schaltung (S4, S5) aufweist, dadurch gekennzeichnet, daß die gleichrichtende und integrierende Schaltung (S4, S5) durch die Steuermittel gesteuert oder geregelt wird, um das Ausgangssignal des Verstärkers (S2) mit variabler Verstärkung über aufeinanderfolgende Zeiträume gleichzurichten und zu integrieren, und daß die Steuermittel den Ausgangspegel der gleichrichtenden und integrierenden Schaltung (S4, S5) am Ende jeder dieser Zeiträume messen, um aufeinanderfolgende Ablesungen zu bilden, und dann jedesmal den Integrator (S5) der gleichrichtenden und integrierenden Schaltung zurückstellen, wobei jede Ablesung mit dem Bezugswert verglichen wird, um zu bestimmen, ob die Ablesung einen Klopfzustand im Motor anzeigt, daß die Steuermittel Mittel zum Bestimmen eines Untergrundmittelwerts der Ablesungen über einen Zeitraum einschließen, welcher Untergrundmittelwert als Durchschnitt der Ablesungen gebildet wird, der in Abwesenheit irgendeines Klopfzustandes des Motors, der festgestellt wird, vorherrscht, und daß die Rückkopplungsschaltung die Verstärkung des Verstärkers (S2) mit variabler Verstärkung in Abhängigkeit vom Untergrunddurchschnitt steuert oder regelt.

2. System zum Feststellen von Klopfen nach Anspruch 1, dadurch gekennzeichnet, daß die Steuermittel feststellen, ob der Untergrundmittelwert über eine obere Schwelle anwächst oder unter eine untere Schwelle abfällt, um die Verstärkung des Verstärkers mit variabler Verstärkung über die Rückkopplungsschaltung zu verkleinern oder zu vergrößern.

3. System zum Feststellen von Klopfen nach Anspruch 1 oder 2, dadurch gekennzeichnet, daß die Rückkopplungsschaltung die Verstärkung des Verstärkers (S2) mit variabler Verstärkung nur ändert, nachdem eine vorbestimmte Anzahl von aufeinanderfolgenden Ablesungen des Untergrundmittelwertes oberhalb des oberen Schwellenwertes oder unterhalb des unteren Schwellenwertes liegt.

4. System zum Feststellen von Klopfen nach einem vorangehenden Anspruch, dadurch gekennzeichnet, daß die Steuermittel den Bezugswert ändern, gegen den der Ausgangspegel der gleichrichtenden und integrierenden Schaltung verglichen wird, und zwar proportional zu Änderungen, die an der Verstärkung des Verstärkers (S2) mit variabler Verstärkung vorgenommen werden.

5. System zum Feststellen von Klopfen nach einem vorangehenden Anspruch, dadurch gekennzeichnet, daß der Verstärker (S2) mit variabler Verstärkung einen SteilheitsVerstärker aufweist und die Rückkopplungsschaltung den Vorspannungsstrom des Steilheits-Verstärkers steuert oder regelt.

6. System zum Feststellen von Klopfen nach einem vorangehenden Anspruch, dadurch gekennzeichnet, daß die Steuermittel eine Pulsreihe (M/S) mit variablem Tastverhältnis abgeben, und daß die Rückkopplungsschaltung einen Digital-Analog-Wandler (R4, C1) aufweist, der die Pulsreihe empfängt und dessen Ausgang mit dem Verstärker (S2) mit variabler Verstärkung verbunden ist, um dessen Verstärkung zu steuern oder zu regeln.

## Revendications

1. Système de détection du cliquetis pour un moteur à combustion interne, comprenant une entrée (EN) pour la réception d'un signal d'un transducteur captant les vibrations, un amplificateur à gain variable (S2) connecté à ladite entrée, un circuit redresseur et intégrateur (S4, S5) connecté à la sortie de l'amplificateur, un moyen de contrôle pour comparer le niveau à la sortie du circuit redresseur et intégrateur (S4, S5) à une référence pour déterminer si le moteur est en condition de cliquetis et un circuit de contre-réaction pour contrôler le gain de l'amplificateur à gain variable (S2) selon les variations du niveau à la sortie du circuit redresseur et intégrateur (S4, S5), caractérisé en ce que le circuit redresseur et intégrateur (S4, S5) est contrôlé par le moyen de contrôle pour redresser et intégrer la sortie de l'amplificateur à gain variable (S2) sur des périodes successives de temps et le moyen de contrôle mesure le niveau à la sortie du circuit redresseur et intégrateur (S4, S5) à la fin de chacune desdites périodes de temps pour donner des lectures successives et ensuite remet à chaque fois à zéro l'intégrateur (S5) dudit circuit redresseur et intégrateur, chaque lecture étant comparée à ladite référence pour déterminer si ladite lecture indique une condition de cliquetis dans le moteur, en ce que ledit moyen de contrôle comporte un moyen pour déterminer une moyenne de base desdites lectures sur une certaine période de temps, ladite moyenne de base étant formée en tant qu'une moyenne desdites lectures régnant en l'absence de toute condition de cliquetis du moteur qui est détectée et en ce que le circuit de contre-réaction contrôle le gain dudit amplificateur à gain variable (S2) selon ladite moyenne de base.

2. Système de détection du cliquetis selon la revendication 1, caractérisé en ce que le moyen de contrôle détermine si ladite moyenne de base dépasse un seuil supérieur ou tombe en dessous d'un niveau inférieur, afin de diminuer ou d'augmenter le gain dudit amplificateur à gain variable par ledit circuit de ontre-réaction.

3. Système de détection du cliquetis selon la revendication 1 ou 2, caractérisé en ce que le circuit de contre-réaction modifie le gain de l'amplificateur à gain variable (S2) uniquement quand un nombre prédéterminé de lectures successives de la moyenne de base se trouve au-dessus du seuil supérieur ou en dessous du seuil inférieur.

4. Système de détection du cliquetis selon l'une quelconque des revendications précédentes, caractérisé en ce que le moyen de contrôle modifie ladite référence, avec laquelle le niveau à la sortie du circuit redresseur et intégrateur est comparé, proportionnellement à des changements qui sont apportés au gain de l'amplificateur à gain variable (S2).

5. Système de détection du cliquetis selon toutes revendications précédentes, caractérisé en ce que ledit amplificateur à gain variable (S2) comprend un amplificateur à transconductance et ledit circuit de contre-réaction contrôle le courant de polarisation dudit amplificateur à transconductance.

6. Système de détection du cliquetis selon toutes revendications précédentes, caractérisé en ce que le moyen de contrôle produit un train d'impulsions (M/S) d'un rapport marque/espace variable et en ce que le circuit de contre-réaction comprend un convertisseur numérique-analogique (R4, C1) qui reçoit ledit train d'impulsions et dont la sortie est connectée à l'amplificateur à gain variable (S2) pour contrôler son gain.
